# EUROPEAN PATENT SPECIFICATION

(11) **EP 0 617 435 B1**
(45) Date of publication and mention of the grant of the patent: **11.03.1998**
(21) Application number: 94302076.8
(22) Date of filing: 23.03.1994
(51) Int. Cl.: H01B 19/00, H01B 3/28

(54) **Electrically insulating material for composite insulators, process for the production of composite insulators, and composite insulators**
Elektrisch isolierendes Material für Verbundisolatoren, Verfahren zur Erzeugung der Verbundisolatoren, und Verbundisolatoren
Matériau électriquement isolant pour isolateurs composites, procédé de production des isolateurs composites et isolateurs composites

(30) Priority: 26.03.1993 JP 68757/93
(43) Date of publication of application: 28.09.1994
(73) Proprietor: NGK INSULATORS, LTD., Nagoya City Aichi Pref. (JP)
(72) Inventor: Nkajima, Isao, Nagoya City, Aichi Pref. (JP); Mizuno, Seiichi, Nagoya City, Aichi Pref. (JP)
(74) Representative: Paget, Hugh Charles Edward

(56) References cited:
- FR-A- 2 587 934
- DATABASE WPI Section Ch, Derwent Publications Ltd., London, GB; Class A17, AN 94-212323 & JP-A-6 150 753
- DATABASE WPI Section Ch, Derwent Publications Ltd., London, GB; Class A17, AN 94-002975 & JP-A-5 314 841
- DATABASE WPI Section Ch, Derwent Publications Ltd., London, GB; Class A21, AN 93-224349 & JP-A-5 148 343

## Description

### BACKGROUND OF THE INVENTION

### (1) Field of the Invention

The present invention relates to an electrically insulating material to be used in composite insulators, to a process for the production of composite insulators by using such an electrically insulating material for housing thereof, and to composite insulators using such an electrically insulating material as housing thereof.

### (2) Related Art Statement

Recently, demands have been increasing for the composite insulators. In general, the composite insulator, which is also called "polymer insulator", has the structure in which a housing made of an electrically insulating material such as EPDM rubber is provided around the outer periphery of a rod-shaped insulating supporting member made of, for example, a fiber-reinforced plastics (FRP).

Into rubber compounds as electrically insulating material for housings has been conventionally incorporated silica, alumina, titania, calcium carbonate, magnesium hydroxide, or aluminum hydroxide as a reinforcement or a filler. Among them, hydrates such as magnesium hydroxide or aluminum hydroxide is useful, because such hydrates can enhance tracking resistance and erosion resistance of the insulator. Particularly, since a temperature at which aluminum hydroxide releases water of crystallization is as low as about 20°C, aluminum hydroxide is the most appropriate as the additive for the electrically insulating rubber materials for the housing of the insulator.

In order to form a housing around the outer periphery of an insulating supporting member, an injection molding process, a transfer molding process, or a compression molding process is employed. In these processes, a unvulcanized resin or a unvulcanized rubber composition is charged into a two-split type mold, and the housing is formed by curing this electrically insulating material in the mold.

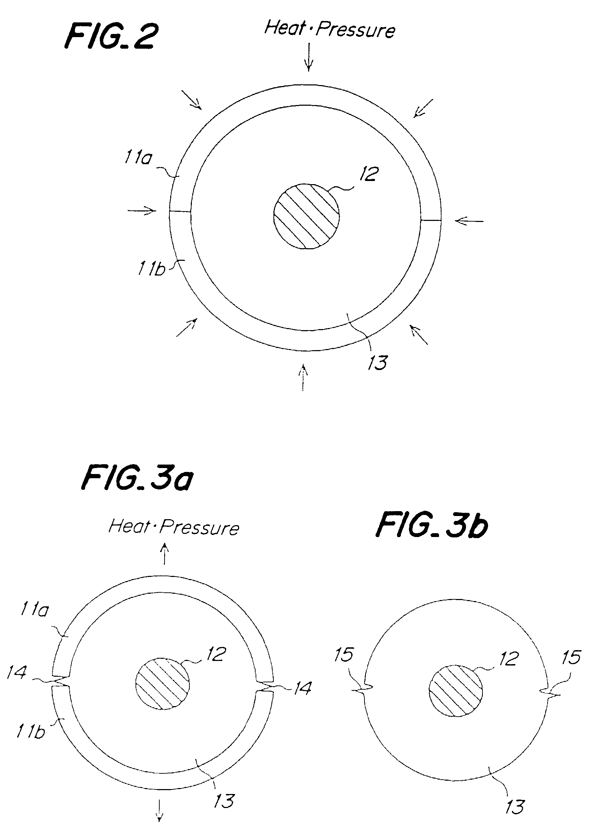

Figs. 2 and 3(a) and 3(b) are sectional views for schematically illustrating an electrically insulating supporting member 12 and a housing 13 around the supporting member.

First, the electrically insulating supporting member 12 is placed in a central portion of the mold constituted by split mold units 11a and 11b. Then, as shown in Fig. 2, an electrically insulating material is injected into the mold around the supporting member 12 under pressure by means of an injection unit not shown. At that time, the mold units 11a and 11b are firmly tightened, and pressure and heat are applied to the mold units 11a and 11b from the outer side of the mold. The reason why the pressure is applied to the mold units 11a and 11b from the outside is that the molding units 11a and 11b are prevented from parting from each other due to the internal pressure due to injection pressure and thermal expansion of the electrically insulating material 13 charged in the mold. Further, the mold units 11a and 11b are heated to promote the vulcanization of the electrically insulating material 13 at an appropriate vulcanization temperature.

However, even when pressure is applied to the mold units 11a and 11b from the outer side of the mold, the thermal expansion of the electrically insulating material 13 may make the internal pressure of the insulating material 13 exceed the pressure applied to the mold units. In such a case, as shown in Fig. 3(a), the butted faces of the mold units 11a and 11b are separated from each other, so that a part of the unvulcanized electrically insulating material may come out through a gap between the separated mold units 11a and 11b. That portion 14 of the electrically insulating material which sticks out through the gap between the mold units 11a and 11b is vulcanized outside the mold. Consequently, the molding released from the mold suffers a phenomenon that since the housing lacks rubber by an amount corresponding to the rubber stuck out from the mold, rubber of the housing is depressed at a butted area between the mold units 11a and 11b during cooling or a crack 15 is formed near the butted area between the mold units 11a and 11b. Such a phenomenon is illustrated in Fig. 3(b).

The above phenomenon can be prevented by raising the pressure applied to the mold units 11a and 11b from the outside. However, in order to enhance productivity of the insulators, it has been recently investigated that the electrically insulating material 13 is more speedily vulcanized by raising the vulcanization temperature for the material 13. When the vulcanization temperature of the electrically insulating material is raised, thermal expansion of the electrically insulating material increases. Consequently, the pressure to be applied to the mold units 11a and 11b from the outside must be further raised. As a result, a device for pressurizing the mold units 11a and 11b from the outer side becomes bulky and complicated, which results in rise in the production cost of the composite insulators.

### SUMMARY OF THE INVENTION

The present invention has been accomplished to solve the above-mentioned problems, and is to provide an electrically insulating material to be used for a housing of a composite insulator, which can prevent the housing from being cracked on molding without increasing a production cost or reducing productivity.

The present invention relates to an electrically insulating material to be used for a housing in a composite insulator, as set out in claim 1. It is considered that the lower the coefficient of linear thermal expansion of the electrically insulating material, the better is the performance of the insulator. But, such a lower limit will depend upon materials used.

Preferably, the electrically insulating material is composed of at least one base polymer such as EPDM, EPM, silicone rubber and/or EVA, additives such as a plasticizer and a reinforcing filler, and an antioxidant, whereas a powdery inorganic material such as aluminum oxide, magnesium oxide and/or calcium carbonate is incorporated into the electrically insulating material. The volume of the incorporated powdery inorganic material is preferably 35 to 50 when that of the electrically insulating material is taken as 100. The incorporated powdery inorganic material may be partially replaced by other powdery inorganic material such as silica, alumina and/or titania in a volume of such as 10-20 when that of the electrically insulating material is taken as 100.

The term "thermal expansion coefficient-regulating material" used herein is intended to mean a material capable of regulating or decreasing the coefficient of thermal expansion of the electrically insulating material.

The following are considered as preferable embodiments of the electrically insulating material.
(1) The thermal expansion coefficient-regulating material is incorporated, in such a volume, into the electrically insulating material that the volume of the thermal expansion coefficient-regulating material is in a range of 35 to 50 when the volume of the electrically insulating material is taken as 100.
(2) When the electrically insulating material is an ethylene-propylene-diene terpolymer (EPDM) rubber, aluminum hydroxide [Aℓ(OH)₃ or Aℓ₂O₃·3H₂O] is incorporated in an amount of 35-50 when the volume of the electrically insulating material is taken as so. Although aluminum hydroxide has been used as the additive as mentioned above, the addition amount is far smaller than the addition amount in the present invention. Furthermore, no prior art exists to suggest that aluminum hydroxide is added in such a great amount as to function as the thermal expansion coefficient-regulating material.

According to the present invention, since the coefficient of linear thermal expansion of the electrically insulating material is not more than 1.5 x 10⁻⁴/°C⁻, the housing of the insulator can be prevented from being cracked on molding and curing. Further, since the present invention is to merely incorporate the thermal expansion coefficient-regulating material into the electrically insulating material, rise in the production cost and reduction in productivity can be avoided.

Another aspect of the present invention is to provide a process for producing a composite insulator including an electrically insulating supporting member and a housing formed around an outer periphery of the supporting member, as set out in claim 6.

A further aspect of the present invention is to provide a composite insulator including an electrically insulating supporting member and a housing formed around the supporting member, wherein the housing is formed around the outer periphery of an insulating supporting member inside a mold through vulcanization by heating at high temperature under high pressure, wherein the electrically insulating material includes an electrically insulating component and a thermal expansion coefficient-regulating material present in the electrically insulating component in an amount such that the coefficient of linear thermal expansion of the electrically insulating material is not more than 1.5 x 10⁻⁴/°C.

In this further aspect of the invention, the above preferred embodiments in the electrically insulating material are also applicable as preferred embodiments for the above producing process and as those for the above composite insulator.

These and other objects, features and advantages of the invention will be appreciated upon reading the following description of the invention.

### BRIEF DESCRIPTION OF THE INVENTION

For a better understanding of the invention, reference is made to the attached drawings, wherein:
Fig. 1 is a graph showing the relationship between the parts by weight of Al(OH)₃ relative to 100 parts by weight of the base polymer and the coefficient of linear thermal expansion of the EPDM rubber;
Fig. 2 is a sectional view for illustrating the state in which the electrically insulating support member and the housing made of the EPDM rubber are placed inside the mold; and
Fig. 3(a) is a sectional view for schematically illustrating the state that the electrically insulating material is stuck out from the mold on molding, and Fig. 3(b) is a sectional view for schematically illustrating the phenomenon that the housing is cracked or drawn due to sticking out the electrically insulating material.

### DETAILED DESCRIPTION OF THE INVENTION

As mentioned above, in order to solve the problems encountered by the above-mentioned art, the coefficient of thermal expansion of the electrically insulating material has to be decreased. The present inventors noted that the thermal expansion coefficient-regulating material is incorporated into the electrically insulating material for this purpose.

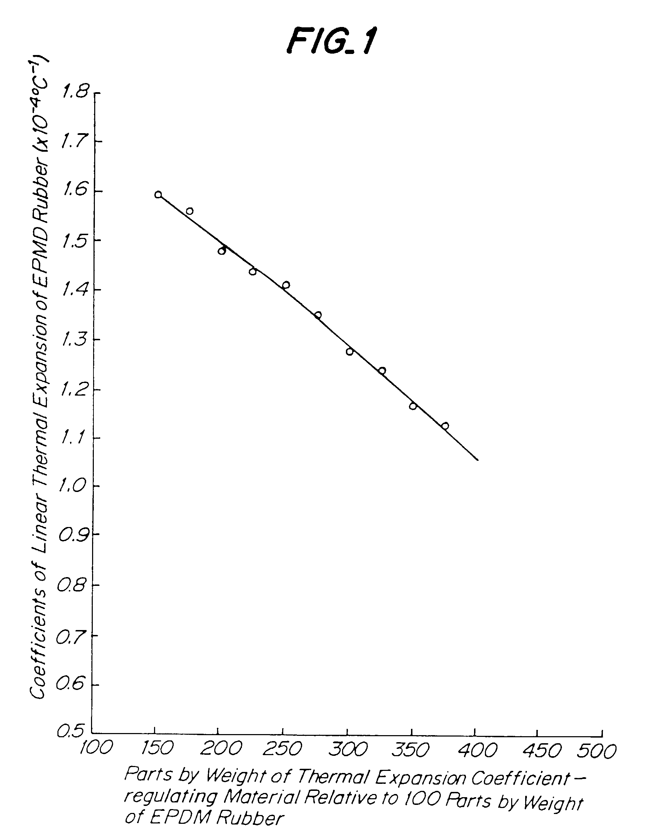

The present invention will be explained specifically based on Table 1 and Fig. 1.

In Table 1 are given experimental data showing moldability of electrically insulating materials into which aluminum hydroxide has been incorporated as a thermal expansion coefficient-regulating material.

The electrically insulating materials used in this experiment containing an EPDM rubber with the compositions in which an amount of aluminum hydroxide was varied, as shown in Table 1. That is, the EPDM rubber had the composition of an EPDM base polymer, 6.5 parts by weight of a curing agent (dicumylperoxide), and 5 parts by weight of an accelerator activator (zinc oxide), 25 parts by weight of a softener (paraffin oil), 1 part by weight of a dispersant (stearic acid), and 10 parts by weight of a coloring agent (titanium oxide) with respect to 100 parts by weight of the EPDM base polymer, while the addition amount of aluminum hydroxide was varied in a range of 150-400 parts by weight relative to 100 parts by weight of the EPDM base polymer as shown in Table 1. Thereby, Samples EP-1 through EP-11 were produced through kneading and vulcanization at 180°C for 6 minutes. Fig. 1 shows the relationship between the coefficient of linear thermal expansion and the addition amount of aluminum hydroxide with respect to each of Samples EP-1 through EP-10. Since EP-11 had poor dispersibility of aluminum hydroxide in the kneaded mixture, a molding was not produced by EP-11. As is seen in Fig. 1, the coefficient of linear thermal expansion of the EPDM rubber decreases with the increase in the addition amount of aluminum hydroxide.

With respect to each of Samples EP-1 through EP-10, moldings were produced five times by using a conventional mold as illustrated in Fig. 2 and Figs. 3(a) and 3(b) through compression molding. Further, dispersibility of aluminum hydroxide in the kneaded mixture was observed by naked eyes.

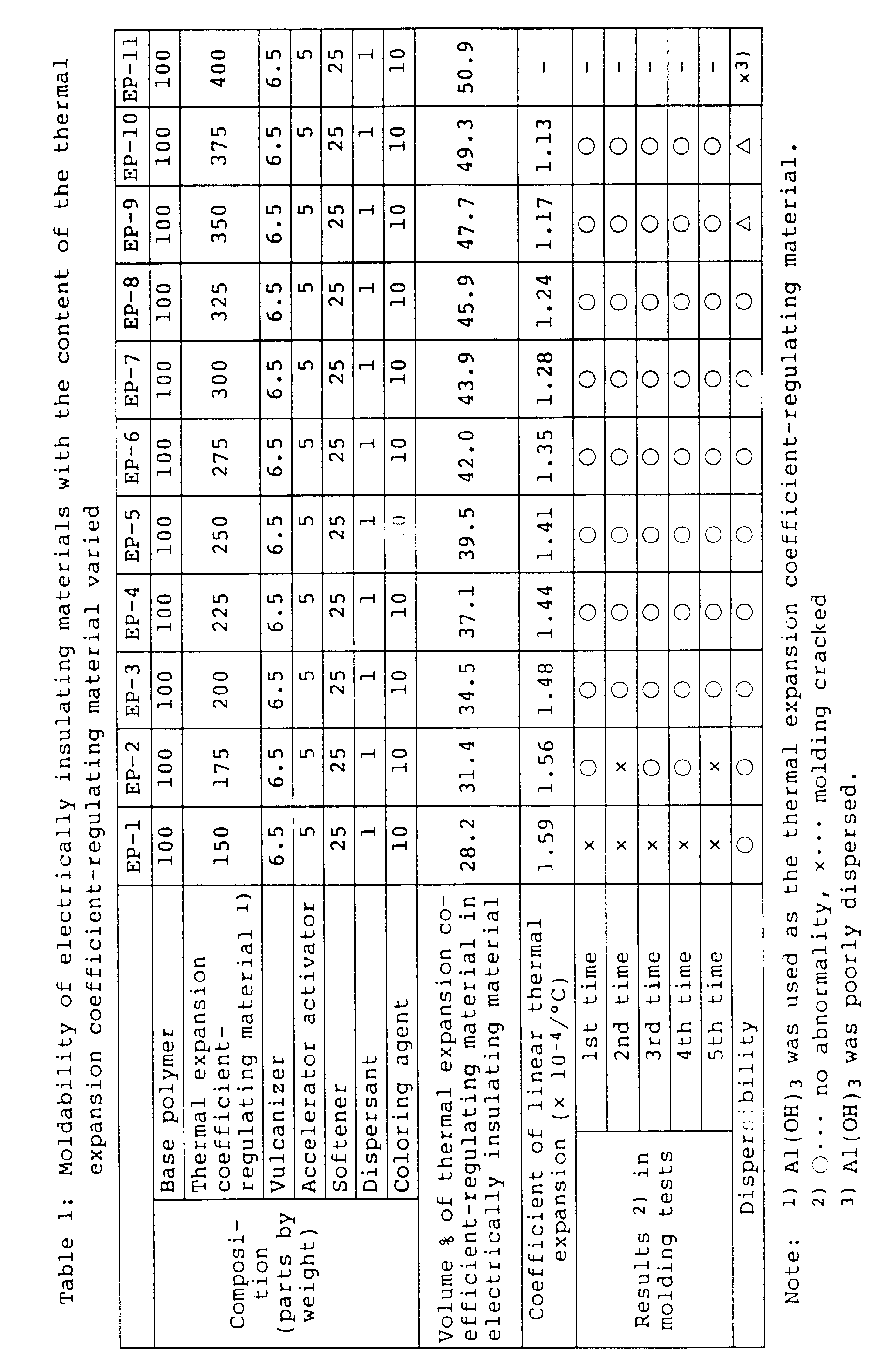

As is seen in Table 1, with respect to EP-1 (addition amount of aluminum hydroxide: 150 parts by weight relative to 100 parts by weight of EPDM base polymer), the EPDM rubber was cracked in all five molding tests. With respect to EP-2 (addition amount of aluminum hydroxide: 175 parts by weight relative to 100 parts by weight of EPDM base polymer), the EPDM rubber was cracked in two of five molding tests. However, with respect to EP-3 through EP-10 (addition amounts of aluminum hydroxide: 200-375 parts by weight relative to 100 parts by weight of EPDM base polymer), no abnormal such as cracking occurred in the EPDM rubber in all the five molding tests.

From the results given in Table 1, it is considered that when the addition amount of aluminum hydroxide is not less than 200 parts by weight relative to 100 parts by weight of the EPDM base polymer, housings of composite insulators can be prevented from being cracking on molding. Further, as is seen from Table 1 and Fig. 1, it is considered that cracking of the housing can be prevented on molding when the coefficient of linear thermal expansion of the electrically insulating material is set at not more than 1.5 x 10⁻⁴/°C.

The present invention is not limited to the above-mentioned experiments, but may be performed as follows:
(1) The present invention is applicable to not only the compression molding but also all other molding processes in which the mold is divided into at least two mold units and the electrically insulating material is molded in the mold at a high temperature under high pressure, such as the injection molding and the transfer molding.
(2) The EPDM rubber and aluminum hydroxide were used as the electrically insulating material and the thermal expansion coefficient-regulating material, respectively, but the present invention is also applicable to other electrically insulating materials which may be molded in similar molding processes and other thermal expansion coefficient-regulating materials.

As detailed in the above, the electrically insulating material according to the present invention can be prevented from being cracked on molding without causing increase in the production cost or reduction in productivity, when the electrically insulating material is used as the housing for the composite insulator.

## Claims

1. A heat-vulcanizable moldable electrically insulating material to be used for a housing in a composite insulator having a structure in which the housing is formed around the outer periphery of an insulating supporting member inside a mold through vulcanization by heating at high temperature under high pressure, wherein the electrically insulating material comprises an electrically insulating component and a thermal expansion coefficient-regulating material present in an amount such that the coefficient of linear thermal expansion of the electrically insulating material is not more than 1.5 x 10⁻⁴/°C.

2. The electrically insulating material set forth in Claim 1, wherein the thermal expansion coefficient-regulating material is a material selected from the group consisting of aluminum hydroxide, silica, alumina, titania, calcium carbonate, and magnesium hydroxide.

3. The electrically insulating material set forth in claim 1 or 2, wherein the thermal expansion coefficient-regulating material is incorporated, in such a volume, into the electrically insulating material that the volume of the thermal expansion coefficient-regulating material is in a range of 35 to 50 when the volume of the electrically insulating material is taken as 100.

4. The electrically insulating material set forth in claim 1, 2 or 3 wherein the electrically insulating material is an ethylene-propylene-diene terpolymer (EPDM) rubber, aluminum hydroxide is incorporated as the thermal expansion coefficient-regulating material in a volume of 35 to 50 when the volume of the EPDM rubber is taken as 100.

5. A composite insulator including an electrically insulating supporting member and a housing formed around an outer periphery of the supporting member inside a mold through vulcanization by heating under pressure, wherein the housing is made of an electrically insulating material as set out in any one of claims 1 to 4.

6. A process for producing a composite insulator including an electrically insulating supporting member and a housing formed around an outer periphery of the supporting member, said process comprising the steps of:
(A) placing the supporting member in a mold split into at least two mold units;
(B) charging an electrically insulating material inside the mold around the outer periphery of the supporting member; and
(C) molding and curing said electrically insulating material around the supporting member after the mold is closed,
wherein the housing is made of an electrically insulating material comprising an electrically insulating component and a thermal expansion coefficient-regulating material present in an amount such that the coefficient of linear thermal expansion of the electrically insulating material is not more than 1.5 x 10⁻⁴/°C.

7. The producing process set forth in Claim 6, wherein the thermal expansion coefficient-regulating material is a material selected from the group consisting of aluminum hydroxide, silica, alumina, titania, calcium carbonate, and magnesium hydroxide.

8. The producing process set forth in Claim 6 or 7, wherein the thermal expansion coefficient-regulating material is incorporated, in such a volume, into the electrically insulating material that the volume of the thermal expansion coefficient-regulating material is in a range of 35 to 50 when the volume of the electrically insulating material is taken as 100.

9. The producing process set forth in Claim 6,7 or 8 wherein the electrically insulating material is an ethylene-propylene-diene terpolymer (EPDM) rubber, aluminum hydroxide is incorporated as the thermal expansion coefficient-regulating material in a volume of 35 to 50 when the volume of the EPDM rubber is taken as 100.

## Patentansprüche

1. Hitzevulkanisierbares, anformbares, elektrisch isolierendes Material zur Verwendung für ein Gehäuse bei einem Verbundisolator, der eine Struktur aufweist, bei der das Gehäuse um die Außenperipherie eines isolierenden Stützelements innerhalb einer Form durch Vulkanisierung durch Erhitzen auf hohe Temperatur unter hohem Druck gebildet ist, worin das elektrisch isolierende Material eine elektrisch isolierende Komponente und ein den Wärmeausdehnungskoeffizienten regulierendes Material umfaßt, das in einer solchen Menge vorhanden ist, daß der lineare Wärmeausdehnungskoeffizient des elektrisch isolierenden Materials nicht über 1,5 x 10⁻⁴/°C liegt.

2. Elektrisch isolierendes Material nach Anspruch 1, worin das den Wärmeausdehnungskoeffizienten regulierende Material ein Material ist, das aus der Gruppe ausgewählt ist, die aus Aluminiumhydroxid, Silika, Aluminiumoxid, Titandioxid, Kalziumkarbonat und Magnesiumhydroxid besteht.

3. Elektrisch isolierendes Material nach Anspruch 1 oder 2, worin das den Wärmeausdehnungskoeffizienten regulierende Material in einem solchen Volumen im elektrisch isolierenden Material aufgenommen ist, daß das Volumen des den Wärmeausdehnungskoeffizienten regulierenden Materials in einem Bereich von 35 bis 50 liegt, wenn das Volumen des elektrisch isolierenden Materials als 100 angenommen wird.

4. Elektrisch isolierendes Material nach Anspruch 1, 2 oder 3, worin das elektrisch isolierende Material ein Ethylen-Propylen-Dien-Terpolymer (EPDM)-Kautschuk ist, Aluminiumhydroxid als den Wärmeausdehnungskoeffizienten regulierendes Material in einem Volumen von 35 bis 50 aufgenommen ist, wenn das Volumen des EPDM-Kautschuks als 100 angenommen wird.

5. Verbundisolator, der ein elektrisch isolierendes Stützelement und ein Gehäuse umfaßt, das durch Vulkanisieren durch Erhitzen unter Druck innerhalb einer Form um eine Außenperipherie des Stützelements herum ausgebildet ist, worin das Gehäuse aus einem elektrisch isolierenden Material besteht, wie in einem der Ansprüche 1 bis 4 dargelegt.

6. Verfahren zur Herstellung eines Verbundisolators, umfassend ein elektrisch isolierendes Stützelement und ein Gehäuse, das um eine Außenperipherie des Stützelements herum ausgebildet ist, wobei das Verfahren folgende Schritte umfaßt:
(A) das Anordnen des Stützelements in einer Form, die in zumindest zwei Formeinheiten geteilt ist;
(B) das Einfüllen eines elektrisch isolierenden Materials in die Form um die Außenperipherie des Stützelements herum; und
(C) das Anformen und Härten des elektrisch isolierenden Material um das Stützelement herum, nachdem die Form geschlossen wurde;
worin das Gehäuse aus einem elektrisch isolierenden Material besteht, das eine elektrisch isolierende Komponente und ein den Wärmeausdehnungskoeffizienten regulierendes Material umfaßt, das in einer solchen Menge vorhanden ist, daß der lineare Wärmeausdehnungskoeffizient des elektrisch isolierenden Materials nicht größer als 1,5 x 10⁻⁴/°C ist.

7. Herstellungsverfahren nach Anspruch 6, worin das den Wärmeausdehnungskoeffizienten regulierende Material ein Material ist, das aus der Gruppe ausgewählt ist, die aus Aluminiumhydroxid, Silika, Aluminiumoxid, Titandioxid, Kalziumkarbonat und Magnesiumhydroxid besteht.

8. Herstellungsverfahren nach Anspruch 6 oder 7, worin das den Wärmeausdehnungskoeffizienten regulierende Material in einem solchen Volumen in das elektrisch isolierende Material aufgenommen wird, daß das Volumen des den Wärmeausdehnungskoeffizienten regulierenden Materials in einem Bereich von 35 bis 50 liegt, wenn das Volumen des elektrisch isolierenden Materials als 100 angenommen wird.

9. Herstellungsverfahren nach Anspruch 6, 7 oder 8, worin das elektrisch isolierende Material ein Ethylen-Propylen-Dien-Terpolymer(EPDM)-Kautschuk ist und Aluminiumhydroxid als den Wärmeausdehnungskoeffizienten regulierendes Material in einem Volumen von 35 bis 50 aufgenommen wird, wenn das Volumen des EPDM-Kautschuk als 100 angenommen wird.

## Revendications

1. Matériau électriquement isolant moulable et vulcanisable à la chaleur utilisé pour un logement dans un isolateur composite ayant une structure dans laquelle le logement est formé autour de la périphérie externe d'un organe de support isolant à l'intérieur d'un moule par vulcanisation en chauffant à une haute température sous une haute pression, où le matériau électriquement isolant comprend un composant électriquement isolant et un matériau régulateur du coefficient de dilatation thermique présent en une quantité telle que le coefficient de dilatation thermique linéaire du matériau électriquement isolant ne dépasse pas 1,5 x 10⁻⁴/°C.

2. Matériau électriquement isolant selon la revendication 1, où le matériau régulateur du coefficient de dilatation thermique et un matériau sélectionné dans le groupe consistant en hydroxyde d'aluminium, silice, alumine, oxyde de titane, carbonate de calcium, et hydroxyde de magnésium.

3. Matériau électriquement isolant selon la revendication 1 ou 2, où le matériau régulateur du coefficient de dilatation thermique est incorporé en un volume tel dans le matériau électriquement isolant que le volume du matériau régulateur du coefficient de dilatation thermique soit compris entre 35 et 50 quand le volume du matériau électriquement isolant est pris pour 100.

4. Matériau électriquement isolant selon la revendication 1, 2 ou 3, où le matériau électriquement isolant est un caoutchouc d'un terpolymère d'éthylène-propylène-diène (EPDM), de l'hydroxyde d'aluminium est incorporé en tant que matériau régulateur du coefficient de dilatation thermique en un volume de 35 à 50 quand le volume du caoutchouc EPDM est pris pour 100.

5. Isolateur composite comprenant un organe de support électriquement isolant et un logement formé autour d'une périphérie externe de l'organe de support à l'intérieur d'un moule par vulcanisation en chauffant sous pression où le logement est fait d'un matériau électriquement isolant tel qu'indiqué selon l'une des revendications 1 à 4.

6. Procédé de production d'un isolateur composite comprenant un organe de support électriquement isolant et un logement formé autour d'une périphérie externe de l'organe de support, ledit procédé comprenant les étapes de :
(A) placer l'organe de support dans un moule divisé en au moins deux unités de moule;
(B) charger un matériau électriquement isolant à l'intérieur du moule autour de la périphérie externe de l'organe de support; et
(C) mouler et durcir ledit matériau électriquement isolant autour de l'organe de support après avoir fermé le moule,
où le logement est fait d'un matériau électriquement isolant comprenant un composant électriquement isolant et un matériau régulateur du coefficient de dilatation thermique présent en une quantité telle que le coefficient de dilatation thermique linéaire du matériau électriquement isolant ne dépasse pas 1,5 x 10⁻⁴/°C.

7. Procédé de production selon la revendication 6, où le matériau régulateur du coefficient de dilatation thermique est un matériau sélectionné dans le groupe consistant en hydroxyde d'aluminium, silice, alumine, oxyde de titane, carbonate de calcium, et hydroxyde de magnésium.

8. Procédé de production selon la revendication 6 ou 7, où le matériau régulateur du coefficient de dilatation thermique est incorporé en un volume tel, dans le matériau électriquement isolant, que le volume du matériau régulateur du coefficient de dilatation thermique soit compris entre 35 et 50 quand le volume du matériau électriquement isolant est pris pour 100.

9. Procédé de production selon la revendication 6,7 ou 8 où le matériau électriquement isolant est un caoutchouc d'un terpolymère d'éthylène-propylène-diène (EPDM), de l'hydroxyde d'aluminium est incorporé en tant que matériau régulateur du coefficient de dilatation thermique en un volume de 35 à 50 quand le volume du caoutchouc EPMD est pris pour 100.
